**Europäisches Patentamt**

**European Patent Office**

**Office européen des brevets**

(19)

(11) Veröffentlichungsnummer : **0 171 574**
**B1**

(12) **EUROPÄISCHE PATENTSCHRIFT**

(45) Veröffentlichungstag der Patentschrift :
20.09.89

(21) Anmeldenummer : 85108207.3

(22) Anmeldetag : 03.07.85

(51) Int. Cl.⁴ : **B 23 B 31/08**

(54) **Reibahlenhalterung.**

(30) Priorität : 13.07.84 DE 3425869
22.11.84 DE 8434179 U

(43) Veröffentlichungstag der Anmeldung :
19.02.86 Patentblatt 86/08

(45) Bekanntmachung des Hinweises auf die Patenterteilung : 20.09.89 Patentblatt 89/38

(84) Benannte Vertragsstaaten :
AT BE CH DE FR GB IT LI SE

(56) Entgegenhaltungen :
CH—A— 554 212
CH—A— 598 471
DE—U— 8 308 120
US—A— 2 525 646
US—A— 2 626 812
US—A— 2 767 564

(73) Patentinhaber : Wellach, Adolf
Fahrenberg 12a
D-4300 Essen 15 (DE)

(72) Erfinder : Wellach, Adolf
Fahrenberg 12a
D-4300 Essen 15 (DE)

(74) Vertreter : Zenz, Joachim Klaus, Dipl.-Ing. et al
ZENZ & HELBER Patentanwälte Am Ruhrstein 1
D-4300 Essen 1 (DE)

EP 0 171 574 B1

**Beschreibung**

Die Erfindung bezieht sich auf eine Werkzeughalterung, insbesondere Reibahlenhalterung für Werkzeugmaschinen, mit einem auf der Werkzeugmaschine zu befestigenden Halter, einer mit radialem Spiel in dem Halter angeordneten Werkzeugaufnahmehülse und einer drehfesten Verbindung zwischen dem Halter und der Werkzeugaufnahmehülse über eine Kupplung, vorzugsweise eine « Oldham »-Kupplung, die eine Kupplungsscheibe solcher Ausbildung und Anordnung in bezug auf gegenüberliegende Stirnflächen des Halters bzw. der Werkzeugaufnahmehülse aufweist, daß die Kupplungsscheibe jeweils Relativbewegungen in allen Radialrichtungen ausführen kann, ferner mit einem rohrförmigen, flüssigkeitsdichten Bauteil, das wenigstens den Bereich, in dem sich der Halter und die Werkzeugaufnahmehülse unter Zwischenschaltung der Kupplungsscheibe gegenüberliegen, überbrückt, an den Enden gegen zentrale Bohrungen des Halters und der Werkzeugaufnahmehülse abgedichtet ist und der Kühlmittelzufuhr zum Werkzeug dient.

Derartige Werkzeughalterungen werden Pendelhalter genannt. Die Pendelfunktion sorgt vor allem beim Arbeiten mit Reibahlen auf Werkzeugmaschinen dafür, einen eventuell bestehenden Achsversatz zwischen einer Reibahlenaufnahmehülse und der aufzureibenden Bohrung zu eliminieren. Die Werkzeugaufnahmehülse muß sehr leichtgängig radial verschiebbar sein, damit die Reibahle auch unter hohen axialen Vorschubkräften dem Achsversatz folgt und eine genau aufgeriebene Bohrung erzielt wird. Die Oldham-Kupplungsscheibe ist bei bekannten Pendelhaltern (DE-A-1 256 039) mit axialen Durchgangslöchern versehen, in die Kugeln eingelegt sind. Der Durchmesser der Kugeln ist größer als die Dicke der Kupplungsscheibe, so daß die Kugeln zwischen radialen Flächen der Werkzeugaufnahmehülse und des an der Werkzeugmaschine befestigten Halters abrollen. Bei den heutigen hohen Vorschubgeschwindigkeiten und den damit verbundenen axialen Drücken, drücken sich die Kugeln bei dieser bekannten Konstruktion sehr schnell in die radialen Laufflächen ein und beeinträchtigen dadurch die Lauf- und Pendelfunktion des Pendelhalters. Die Tendenz zur Schwergängigkeit wird noch dadurch verstärkt, daß mit dem Kühlwasser Späne in den Kupplungsbereich gelangen können. Die Späne werden von den Kugeln eingewalzt, fixiert und verschlechtern dauerhaft die Laufflächengüte.

Bei einer aus dem DE-U-83 08 120 bekannten Werkzeughalterung der eingangs genannten Art ist der Bereich zwischen Halter und Pendelkörper bzw. Werkzeugaufnahmehülse durch eine praktisch starre Hülse überbrückt. Zwischen den beiden Enden der Hülse und den Bohrungswänden im Halter und in der Werkzeugaufnahmehülse sind jeweils elastische Dichtringe vorgesehen, die das Eindringen von Kühlwasser und Metallspänen in den Kupplungsbereich verhindern sollen. Die Standzeiten des bekannten Pendelhalters sind begrenzt. Die Dichtringe können bestenfalls kurzzeitig sowohl die ständigen Relativbewegungen beim Pendeln auffangen als auch ihre teilweise mit hohem Druck belastete Dichtfunktion erfüllen. Die bekannte Verwendung einer Hartmetalleinlage in den Laufflächen ändert an der hohen Verschleißgefahr durch sich eindrückende Kugeln der Oldham-Kupplung grundsätzlich nichts. Es wird nur das Verschleißausmaß mit entsprechend höherem Materialaufwand graduell vermindert.

Der Erfindung liegt demgegenüber die Aufgabe zugrunde, die eingangs genannte Werkzeughalterung so zu verbessern, daß ihre Standzeit wesentlich erhöht und ihr Wartungsaufwand dementsprechend vermindert ist.

Diese Aufgabe wird bei der eingangs genannten Werkzeughalterung erfindungsgemäß dadurch gelöst, daß das rohrförmige flüssigkeitsdichte Bauteil aus einem durch die Relativbewegung von Halter und Werkzeugaufnahmehülse verformbaren Material besteht und daß das Bauteil an seinen Endbereichen mit dem Halter und der Werkzeugaufnahmehülse fest verbunden ist.

Bei der Erfindung sind die Ausgleichsfunktion und die Dichtfunktion der der zentralen Kühlmittelzufuhr dienenden Komponenten verschiedenen Teilen zugeordnet. Die Relativbewegung zwischen dem Halter und der Werkzeugaufnahmehülse wird durch das relativ lange rohrförmige Bauteil ausgeglichen, das sich unbeschadet seiner Kühlmittelführungsfunktion im Betrieb über seine Gesamtlänge durchbiegen kann. Für den absolut flüssigkeitsdichten Abschluß zwischen den Endbereichen des rohrförmigen Bauteils und den die Kühlflüssigkeit führenden Bohrungen im Halter und in der Werkzeugaufnahmehülse sorgen feste Verbindungen, die von den mechanischen Querbeanspruchungen aufgrund der Verformung des rohrförmigen Bauteils entlastet sind.

In bevorzugter Weiterbildung der Erfindung wird die Standzeit der Werkzeughalterung noch dadurch erhöht, daß zu beiden Seiten der Kupplungsscheibe radiale Stirnflächen vorgesehen sind, daß die beiden kupplungsseitigen radialen Stirnflächen und radial verlaufenden Teile der dem Halter und der Werkzeugaufnahmehülse zugeordneten Stirnflächen jeweils als ebene Gleichflächen ausgebildet sind und zur Übertragung der axialen Vorschubkräfte des Werkzeugs paarweise einander zugewandt und in Berührungskontakt sind. Dadurch ergibt sich eine wesentliche Herabsetzung der Pressung im Vergleich mit den bekannten Konstruktionen und eine entsprechende Erhöhung der Standzeit und eine Herabsetzung der Betriebskosten. Die Reibahlenhalterung braucht weniger häufig ausgetauscht zu werden. Die Gleitfläche selbst braucht nicht geschliffen und der Werkstoff kein hochfestes Material zu sein, so daß auch die Herstellung der Laufflächen verbilligt werden kann.

Bei einer aus der CH-A-554 212 bekannten Gewindeschneidvorrichtung ist eine radiale Beweglichkeit zwischen einem Werkzeughalter und einem Mitnahmeschaft durch zwei gekreuzte Schwalbenschwanzführungen vorgesehen. Anders als beim Aufreiben von Bohrungen gibt es das Problem der Übertragung hoher Axialkräfte beim Gewindeschneiden nicht. Die Gestaltung der Führungsfläche ist daher bei der bekannten Gewindeschneidvorrichtung beliebig.

Vorteilhafte Weiterbildungen der Erfindung sind in den Unteransprüchen gekennzeichnet.

Die Erfindung wird anhand der Zeichnung erläutert. Es zeigen :

Fig. 1 einen Längsschnitt durch eine Reibahlenhalterung

Fig. 2 einen Schnitt bei der Linie A-A nach Fig. 1, zur Darstellung der « Oldham »-Kupplung ;

Fig. 3 einen Längsschnitt durch die Reibahlenhalterung mit einer Kupplungsscheibe hoher Gleitfähigkeit ;

Fig. 4 einen Längsschnitt durch die Reibahlenhalterung mit detaillierter Darstellung der Abdichtung des Kupplungsbereichs ; und

Fig. 5 einen Längsschnitt durch die Reibahlenhalterung mit einer alternativen Befestigung der Abdichtvorrichtung.

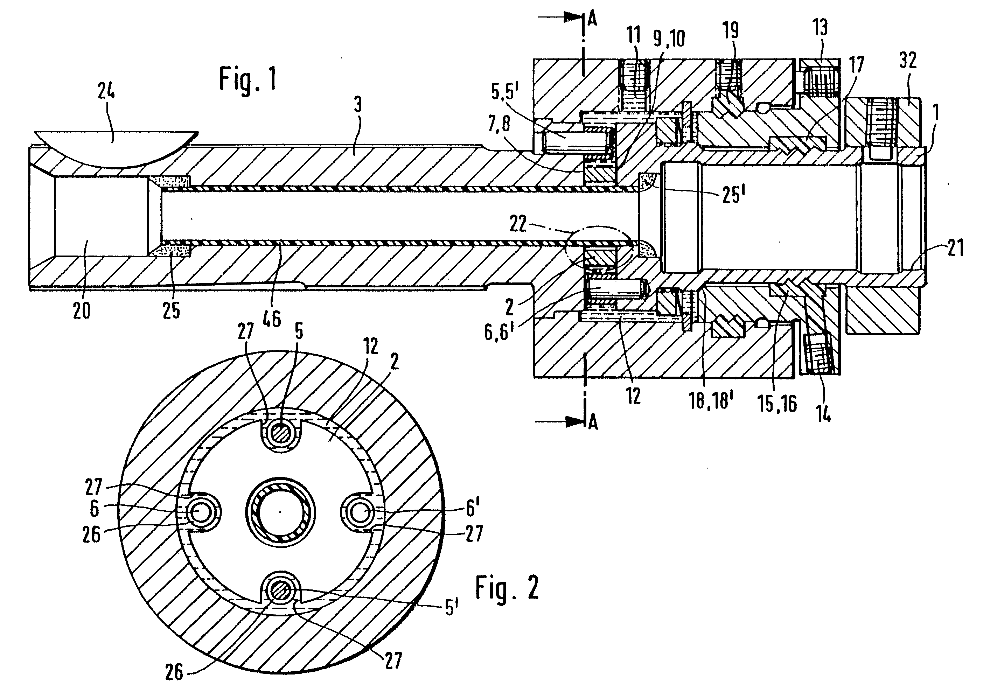

Bei der in Fig. 1 dargestellten Reibahlenhalterung ist eine Werkzeugaufnahmehülse 1 mit einem Halter 3 über eine « Oldham »-Kupplungsscheibe 2 verbunden. In die Kupplungsscheibe 2 greifen je zwei in dem Halter 3 und der Werkzeugaufnahmehülse 1 befindliche Bolzen 5, 5' und 6, 6' ein. Die Kupplungsscheibe 2 liegt mit ihrer Gleitfläche 7 auf der Gleitfläche 8 des Halters 3 auf. Ebenso liegt die Kupplungsscheibe 2 mit ihrer Gleitfläche 9 auf der Gleitfläche 10 der Werkzeugaufnahmehülse 1 auf. Um eine ausreichende Schmierung der Gleitflächenpaare 7, 8 und 9, 10 sicherzustellen, ist eine Ölkammer 11 vorgesehen, deren Öl 12 in Fließverbindung mit den Schmierfilmen zwischen den Gleitflächenpaaren steht. In den Halter 3 ist ein Gewindering 13 eingeschraubt, dessen Innendurchmesser um den Betrag der maximalen radialen Achsverschiebbarkeit der Werkzeugaufnahmehülse 1 größer ist als der Außendurchmesser der Werkzeugaufnahmehülse 1. Zur Abdichtung des so entstehenden Spaltes ist über eine Einfüllöffnung 14 in die sich gegenüberliegenden Ausnehmungen 15, 16 der Werkzeugaufnahmehülse 1 und des Gewinderinges 13 eine in situ aushärtende Silikonmasse 17 eingefüllt. Eine derartige Dichtung 19 ist auch zwischen dem Halter 3 und dem Gewindering 13 vorgesehen.

Der Gewindering 13 weist an seinem einen Ende eine Abschrägung 18 auf, die mit einer entsprechenden Abschrägung 18' der Werkzeugaufnahmehülse 1 zusammenwirkt. Ist der Gewindering 13 soweit eingeschraubt, daß diese Flächen aufeinanderliegen, so ist die radiale Verschiebbarkeit der Werkzeugaufnahmehülse auf Null begrenzt. Je nach Einschraubtiefe, d. h. je nach Abstand der zusammenwirkenden schrägen Flächen, kann die radiale Verschiebbarkeit unterschiedlich begrenzt werden.

Bei der dargestellten Reibahlenhalterung kann durch eine Bohrung 20 im Halter 3 und eine Bohrung 21 in der Werkzeugaufnahmehülse 1 der Reibahle Kühlflüssigkeit zugeführt werden. Um zu Verhindern, daß im Bereich 22 diese Kühlflüssigkeit in Kontakt mit den Gleitflächen kommt, ist ein flüssigkeitsdichter Schlauch 46 über Klebestellen 25 und 25' mit dem Halter 3 und der Werkzeugaufnahmehülse 1 verklebt. Durch diese Maßnahme und die vorher beschriebenen Dichtungen zwischen den einzelnen Bauteilen der Halterung, wird ein Schutz der Gleitflächen vor Kühlflüssigkeit und Spänen bewerkstelligt.

Die Halterung 3 wird durch einen Keil 24 drehfest in der Werkzeugmaschine gehalten. Die nicht dargestellte Reibahle wird mit Befestigungsmitteln 32 mit der Werkzeugaufnahmehülse 1 verbunden.

In Fig. 2 ist ein Schnitt nach den Linien A-A der Fig. 1 dargestellt, wodurch eine Draufsicht auf die Kupplungsscheibe 2 möglich ist. Die Bolzen 5, 5' und 6, 6' sind um 90° zueinander versetzt angeordnet und tragen Hülsen 26, die ein leichtes Abrollen in den Schlitzen 27 der Kupplungsscheibe 2 gestatten.

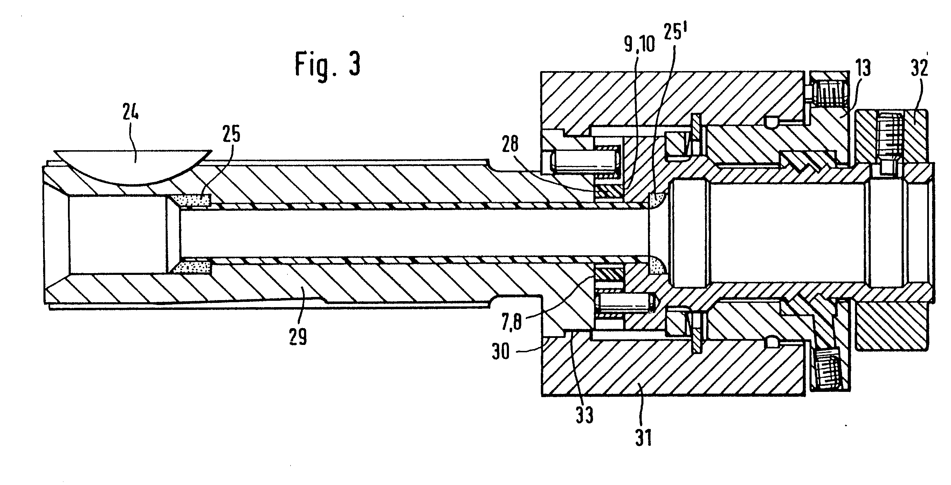

In Fig. 3 sind die Teile, die mit denen der Fig. 1 übereinstimmen, mit gleichen Bezugszeichen versehen. Bei diesem Ausführungsbeispiel ist keine Ölschmierung vorgesehen ; vielmehr wird das Gleiten der Gleitflächen aufeinander dadurch gewährleistet, daß die Kupplungsscheibe 28 aus einem Kunststoffmaterial hoher Gleitfähigkeit, d. h. geringer Reibzahl, hergestellt ist. Ansonsten entspricht dieses Ausführungsbeispiel demjenigen nach Fig. 1. Dieses trifft auch auf die Aufteilung des Halters 3 in zwei Teile zu. Das Maschineneinsatzstück 29 ist über einen Zentrierabschnitt 30 auf eine Hülse 31 ausgerichtet. Die Passung im Bereich 33 ist so gewählt, daß ein genügend dicker Klebstoffilm eindringen kann, um das Maschineneinsatzstück 29 und die Hülse 31 zu verkleben. Es wird vorzugsweise ein Zweikomponentenkleber verwendet, der in einigen Stunden aushärtet. Durch die Zweiteilung des Halters wird die Herstellung vereinfacht und die Lagerhaltung herabgesetzt. Letztere dadurch, daß das Maschineneinsatzstück 29 für alle Reibahlenhalterungen für Reibahlen unterschiedlicher Durchmesser gleich ausgebildet sei kann.

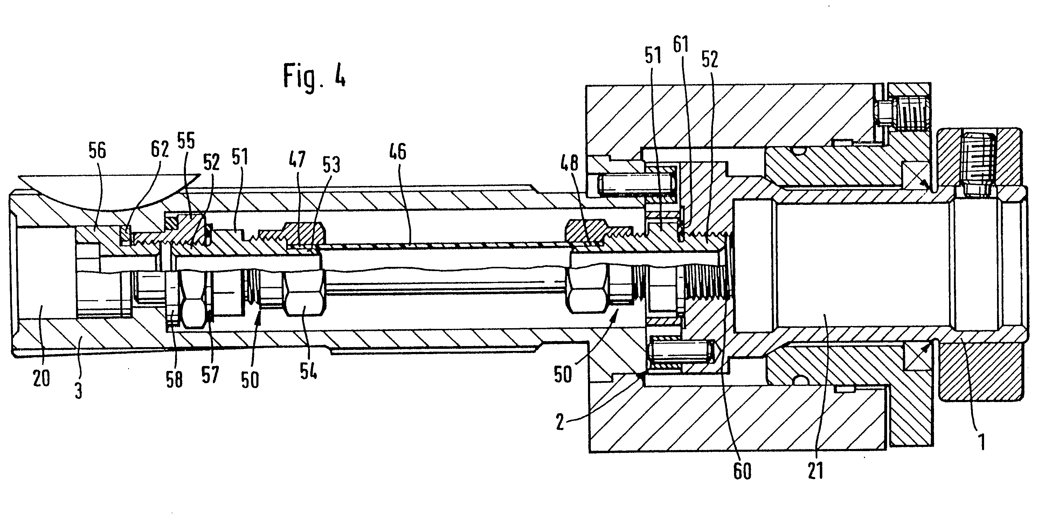

In Figur 4 dient ein Kunststoffschlauch 46 zur Leitung der Reibahlen-Kühlflüssigkeit von der Bohrung 20 zur Bohrung 21. Die beiden Endbereiche 47 und 48 des Schlauchs 46 sind über Schlaucharmaturen 50 mit dem Halter 3 und der Werkzeugaufnahmehülse 1 verbunden. Jede Schlaucharmatur 50 weist ein mit einer zentralen Bohrung versehenes Kupplungsstück 51 mit einem Gewindestutzen 52 und einer Tülle 53 sowie eine auf das Kupplungsstück 51 aufschraubbare Überwurfmutter 54 auf. Der jeweilige Endbereich 47 bzw. 48 ist auf die Tülle 53 aufgeschoben und von der Überwurfmutter 54 flüssigkeitsdicht festgeklemmt.

Die Werkzeugaufnahmehülse 1 ist mit einem Innengewinde 60 versehen, in das der Gewindezapfen 52 des benachbarten Kupplungsstücks 51 direkt eingeschraubt ist. Dabei legt sich eine in Richtung des Gewindestutzens 52 weisende radiale Ringschulter des Kupplungsstücks 51 über einen Dichtring 61 an eine ringförmige Stirnfläche der Werkzeugaufnahmehülse 1 an und dichtet dadurch die Schlaucharmatur mit allen Kühlflüssigkeit führenden Durchlässen gegen die Werkzeugaufnahmehülse 1 ab. Die Verbindung der Schlaucharmatur 50 mit dem Halter 3 ist bei dem Ausführungsbeispiel gemäß Figur 4 mittelbar über einen mit Innengewinde versehenen Verbindungsring 55 und eine Spannschraube 56 vorgesehen. Der Verbindungsring 55 hat einen erweiterten Flanschabschnitt, dessen ringförmige Stirnfläche über einen Dichtring 57 flüssigkeitsdicht an der radialen Ringschulter des Kupplungsstücks 51 in Anlage steht. Die Spannschraube 56 ist mit dem über den Gewindezapfen 52 vorstehenden Abschnitt des Verbindungsrings 55 verschraubt und stützt sich an einer radialen Ringwand 62 über eine Unterlegscheibe und einen Dichtring ab. Ein weiterer Dichtring 58 ist zwischen der dem Kupplungsstück 51 abgewandten Radialfläche am Flansch des Verbindungsrings 55 und einer Radialfläche des Halters 3 angeordnet. Durch Anziehen der Spannschraube 56 wird die Schlaucharmatur 50 in Figur 4 nach links verschoben, wobei die Dichtungen 57 und 58 für einen flüssigkeitsdichten Abschluß zwischen der Bohrung 20 bzw. dem Innenraum des Schlauchs 46 und dem Halter 3 sorgen.

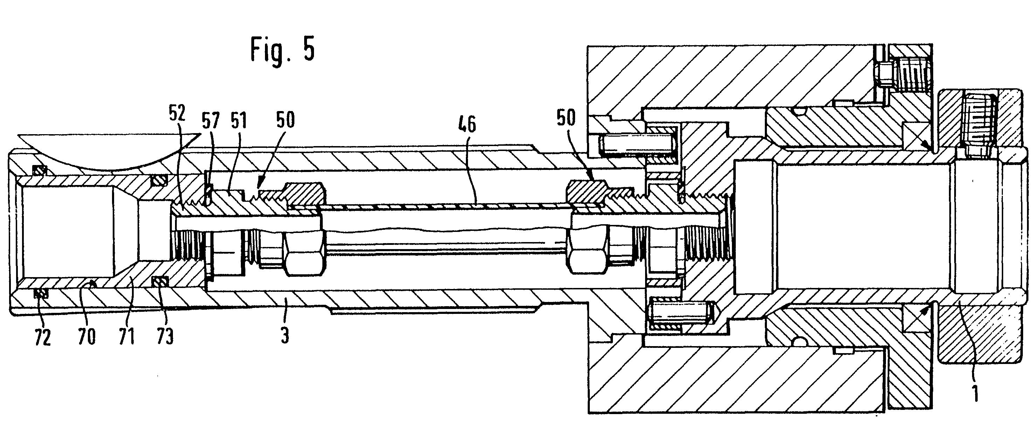

In Fig. 5 ist ein Ausführungsbeispiel gezeigt, das eine besonders einfache Montage zuläßt. Der Gewindestutzen 52 des Kupplungsstücks 51 ist unter Abdichtung über einen Dichtring 57 mit einem Verbindungsstück 71 verschraubt. Das Verbindungsstück 71 ist gegenüber den Wandungen der Bohrung 70 mit O-Ringen 72, 73 abgedichtet. Die Montage des Verbindungsstückes 71 erfolgt zusammen mit dem eingeschraubten Kupplungsstück 51, dem Schlauch 46 und der am anderen Ende des Schlauchs 46 bereits montierten Werkzeugaufnahmehülse 1 durch einfaches Einschieben.

In dem zuvor beschriebenen Ausführungsbeispiel steht ein relativ langer Schlauch 46 zum Ausgleich der radialen Relativbewegungen zwischen Halter 3 und Werkzeugaufnahmehülse 1 zur Verfügung. Eine Beeinträchtigung der Selbstzentrierung der Reibahle findet daher während des Aufreibvorganges nicht statt. Die Verschleißbeanspruchungen des Schlauchs 46 aufgrund dieser Querauslenkungen sind gering; die Anschlußstellen des Schlauchs 46 am Halter 3 einerseits und an der Werkzeugaufnahmehülse 2 andererseits sind weitgehend von Querkräften entlastet. Die Oldham-Kupplung 2 ist durch den Schlauch 46 und die flüssigkeitsdichten Verbindungen des Schlauchs mit dem Halter 3 und der Werkzeugaufnahmehülse 1 vor eindringendem Kühlwasser und Metallspänen wirksam geschützt. Es tritt damit nicht der bei bekannten Reibahlenhalterungen beobachtete Effekt der Schwergängigkeit der Kupplung auf, so daß eine Reibahlenhalterung in der erfindungsgemäßen Ausführung eine sehr lange Standzeit aufweist.

Die erfindungsgemäße Werzeughalterung läßt sich mit den oben beschriebenen Vorteilen nicht nur bei Reibahlen, sondern auch zur Halterung anderer Werkzeuge, z. B. Gewindeschneid- oder Senkwerkzeuge verwenden, um den Achsversatz zwischen der Werkzeugaufnahmehülse und einem zu bearbeitenden Werkstück bzw. dessen Bohrung leichtgängig auszugleichen. Als Kupplung ist jede Vorrichtung geeignet, die ähnlich einer « Oldham »-Kupplung bei drehfester Verbindung eine radiale Relativverschiebung von Werkzeugaufnahmehülse 1 und Halter 3 zuläßt.

**Patentansprüche**

1. Werkzeughalterung, insbesondere Reibahlenhalterung für Werkzeugmaschinen, mit einem auf der Werkzeugmaschine zu befestigenden Halter (3), einer mit radialem Spiel in dem Halter (3) angeordneten Werkzeugaufnahmehülse (1) und einer drehfesten Verbindung zwischen dem Halter (3) und der Werkzeugaufnahmehülse (1) über eine Kupplung (2, 5, 5', 6, 6'), vorzugsweise eine « Oldham »-Kupplung, die eine Kupplungsscheibe (2) solcher Ausbildung und Anordnung in Bezug auf gegenüberliegende Stirnflächen (8 bzw. 10) des Halters (3) bzw. der Werkzeugaufnahmehülse (1) aufweist, daß die Kupplungsscheibe (2) jeweils Relativbewegungen in allen Radialrichtungen ausführen kann, ferner mit einem rohrförmigen, flüssigkeitsdichten Bauteil (46), das wenigstens den Bereich, in dem sich der Halter (3) und die Werkzeugaufnahmehülse (1) unter Zwischenschaltung der Kupplungsscheibe (2) gegenüberliegen, überbrückt, an den Enden (47, 48) gegen zentrale Bohrungen des Halters (3) und der Werkzeugaufnahmehülse (1) abgedichtet ist und der Kühlmittelzufuhr zum Werkzeug dient, dadurch gekennzeichnet, daß das rohrförmige flüssigkeitsdichte Bauteil (46) aus einem durch die Relativbewegung von Halter (3) und Werkzeugaufnahmehülse (1) verformbaren Material besteht und daß das Bauteil (46) an seinen Endbereichen (47, 48) mit dem Halter (3) und der Werkzeugaufnahmehülse (1) fest verbunden ist.

2. Reibenahlenhalterung nach Anspruch 1, dadurch gekennzeichnet, daß zu beiden Seiten der Kupplungsscheibe (2) radiale Stirnflächen (7, 9) vorgesehen sind, daß die beiden kupplungsseitigen radialen Stirnflächen (7, 9) und radial verlaufende Teile der dem Halter (3) und der Werkzeugaufnahmehülse (1) zugeordneten Stirnflächen (8 bzw. 10) jeweils als ebene Gleitflächen ausgebildet sind und zur Übertragung der axialen Vorschubkräfte des Werkzeugs paarweise einander zugewandt und in Berührungskontakt sind.

3. Reibahlenhalterung nach Anspruch 2, dadurch gekennzeichnet, daß die gesamten radialen Stirnflächen (7, 9) der Kupplungsscheibe (2) und die gesamten radialen Stirnflächen (8, 10) des Halters (3) und der Werkzeugaufnahmehülse (1) als senkrecht zur Drehachse der Werkzeugaufnahmehülse (1) liegende ebene Gleitflächen ausgebildet sind.

4. Reibahlenhalterung nach einem der Ansprüche 1 bis 3, dadurch gekennzeichnet, daß die jeweils aufeinander gleitenden beiden Gleitflächen (7, 8 ; 9, 10) wenigstens angenähert gleiche Größe und Ausbildung haben.

5. Reibahlenhalterung nach einem der Ansprüche 1 bis 4, dadurch gekennzeichnet, daß zwischen den Gleitflächen (7, 8 ; 9, 10) ein Schmier- oder Gleitmittel, vorzugsweise Öl, das mit einer im Halter ausgebildeten Ölkammer (11) in Fließverbindung steht, vorgesehen ist.

6. Reibahlenhalterung nach Anspruch einem der Ansprüche 1 bis 4, dadurch gekennzeichnet, daß wenigstens je eine der miteinander in Gleitverbindung stehenden Flächen (7, 8 ; 9, 10) mit einem Kunststoff hoher Gleitfähigkeit (geringer Reibungszahl) beschichtet ist.

7. Reibahlenhalterung nach einem der Ansprüche 1 bis 6, dadurch gekennzeichnet, daß die Kupplungsscheibe (2) aus Kunststoffmaterial hoher Gleitfähigkeit (geringer Reibungszahl) besteht.

8. Reibahlenhalterung nach einem der Ansprüche 1 bis 7, dadurch gekennzeichnet, daß das rohrförmige, verformbare Bauteil als flexibler, dem Druck der Kühlflüssigkeit angepaßter Schlauch (46) vorzugsweise aus Kunststoff oder Metall ausgebildet ist.

9. Reibahlenhalterung nach Anspruch 8, dadurch gekennzeichnet, daß die Endbereiche (47, 48) des Schlauches (46) durch Schlaucharmaturen (50) flüssigkeitsdicht mit den Wänden der Bohrungen des Halters (3) und der Werkzeugaufnahmehülse (1) verbunden sind.

10. Reibahlenhalterung nach Anspruch 9, dadurch gekennzeichnet, daß die Schlaucharmaturen (50) je ein eine Zentralbohrung aufweisendes Kupplungsstück (51) mit einem Gewindestutzen (52) und einer diesem entgegengesetzten Tülle (53) und eine auf das Kupplungsstück auf der Seite der Tülle (53) aufschraubbare Überwurfmutter (54) aufweisen, daß die Endbereiche (47, 48) des Schlauches (46) jeweils zwischen der Tülle (53) und der Überwurfmutter (54) flüssigkeitsdicht festgeklemmt sind und daß je ein Gewindestutzen (52) der Kupplungsstücke (51) mit dem Halter (3) bzw. der Werkzeugaufnahmehülse (1) verbunden ist.

11. Reibahlenhalterung nach Anspruch 10, dadurch gekennzeichnet, daß das mit der Werkzeugaufnahmehülse verbundene Kupplungsstück (51) eine dem Gewindestutzen (52) zugewandte radiale Ringschulter als Anschlag- und Dichtfläche aufweist und daß der Gewindestutzen (52) mit einem in der Bohrung der Werkzeugaufnahmehülse (1) vorgesehenen Innengewinde (60) verschraubt ist, wobei die radiale Ringschulter über einen Dichtring (61) gegen eine ringförmige Stirnfläche der Werkzeugaufnahmehülse (1) verspannt ist.

12. Reibahlenhalterung nach Anspruch 11, dadurch gekennzeichnet, daß auf dem Gewindestutzen (52) des mit dem Halter (3) verbundenen Kupplungsstücks (51) ein mit Innengewinde versehener Verbindungsring (55) aufgeschraubt ist, in dessen über den Gewindestutzen (52) vorstehenden Gewindeabschnitt eine Spannschraube (56) eingeschraubt ist, und daß der Kopf der Spannschraube (56) über einen Dichtring (62) gegen eine radiale Ringschulter in der Bohrung (20) des Halters (3) verspannt ist.

13. Reibahlenhalterung nach Anspruch 12, dadurch gekennzeichnet, daß der Gewindestutzen (52) eines Kupplungsstücks (51) mit einem in eine Bohrung (70) des Halters (3) eingeschobenen Verbindungsstück (71) verschraubt ist und daß das Verbindungsstück (71) über wenigstens einen O-Ring (72, 73) gegenüber der Bohrung (70) abgedichtet ist.

14. Reibahlenhalterung nach Anspruch 9, dadurch gekennzeichnet, daß zwischen den Endbereichen (47, 48) des Schlauches (46) und den Wänden der Bohrungen (20, 21) des Halters (3) und der Werkzeugaufnahmehülse (1) flüssigkeitsdichte Klebstoffverbindungen (25, 25') vorgesehen sind.

15. Reibahlenhalterung nach einem der Ansprüche 1 bis 14, dadurch gekennzeichnet, daß der Halter (3) ein Maschineneinsatzstück (29) mit stirnseitiger radialer Gleitfläche (8), die eine äußere Begrenzungsfläche bildet, und eine den Kupplungsbereich (22) und einen Teil der Werkzeugaufnahmehülse (1) umfassende Hülse (31) aufweist, wobei das Maschineneinsatzstück (29) und die Hülse (31) nach Herstellung mit ihren Endmaßen miteinander verbunden werden.

16. Reibahlenhalterung nach Anspruch 15, dadurch gekennzeichnet, daß das Maschineneinsatzstück (29) und die Hülse (31) ineinandergreifende komplementäre Zentrierabschnitte (30, 30') und sich zu einer Kammer ergänzende Wände aufweisen, wobei die Kammer zur Aufnahme eines Klebemittels zur Verbindung des Maschineneinsatzstücks (29) und der Hülse (31) dient.

**Claims**

1. Tool holder, particulary reamer holder for machine tools, including a mounting (3) to be secured to the machine tool, a tool-receiving sleeve (1) arranged in the mounting (3) with radial play and a rotationally fixed connection between the mounting (3) and the tool-receiving sleeve (1) via a coupling (2, 5, 5', 6, 6'), preferably an « Oldham » coupling, which has a coupling disc (2) so constructed and arranged with respect to the opposing end faces (8 and 10) of the mounting (3) or of the tool-receiving sleeve (1) that the coupling disc (2) can perform relative movements in all radial directions, further including a tubular, liquid-tight component (46) which bridges at least the region in which the mounting (3) and the tool-receiving sleeve (1) are opposed to one another with the interposition of the coupling disc (2), is sealed at the ends (47, 48) with respect to central bores in the mounting (3) and the tool-receiving sleeve (1) and serves to supply cooling medium to the tool, characterised in that the tubular, liquid-tight component (46) comprises a material which is deformable by the relative movement of the mounting (3) and the tool-receiving sleeve (1) and that the component (46) is rigidly connected at its end regions (47, 48) to the mounting (3) and the tool-receiving sleeve (1).

2. Reamer holder as claimed in claim 1, characterised in that radial end faces (7, 9) are provided on both sides of the coupling disc (2), that the two radial end faces (7, 9) on the coupling and radially extending portions of the end faces (8 and 10, respectively) associated with the mounting (3) and the tool-receiving sleeve (1) are each constructed as flat sliding surfaces and are directed towards one another in pairs to transmit the axial thrust forces of the tool and are in contact.

3. Reamer holder as claimed in claim 2, characterised in that the entire radial end faces (7, 9) of the coupling disc (2) and the entire radial end faces (8, 10) of the mounting (3) and of the tool-receiving sleeve (1) are constructed as flat sliding surfaces extending perpendicular to the axis of rotation of the tool-receiving sleeve (1).

4. Reamer holder as claimed in one of claims 1 to 3, characterised in that the two respective sliding surfaces (7, 8 ; 9, 10) sliding on one another have at leat approximately the same size and construction.

5. Reamer holder as claimed in one of claims 1 to 4, characterised in that a lubricating or sliding agent, preferably oil, which is in flow connection with an oil chamber (11) constructed in the mounting, is provided between the sliding surfaces (7, 8 ; 9, 10).

6. Reamer holder as claimed in one of claims 1 to 4, characterised in that at least a respective one of the surfaces (7, 8 ; 9, 10) in sliding connection with one another is coated with a plastics material of high sliding ability (low coefficient of friction).

7. Reamer holder as claimed in one of claims 1 to 6, characterised in that the coupling disc (2) comprises plastics material of high sliding ability (low coefficient of friction).

8. Reamer holder as claimed in one of claims 1 to 7, characterised in that the tubular, deformable component is constructed as a flexible hose (46), which is matched to the pressure of the cooling liquid, preferably of plastics material of metal.

9. Reamer holder as claimed in claim 8, characterised in that the end regions (47, 48) of the hose (46) are connected in a liquid-tight manner by means ot hose fittings (50) to the walls of the bores of the mounting (3) and of the tool-receiving sleeve (1).

10. Reamer holder as claimed in claim 9, characterised in that the hose fittings (50) each have a coupling member (51) having a central bore and including a threaded pipe (52) and a socket (53) opposite to it and a sleeve nut (54) which may be screwed onto the coupling member on the side of the socket (53), that the end regions (47, 48) of the hose (46) are each rigidly clamped between the socket (53) and the sleeve nut (54) in a liquid-tight manner and that a respective threaded pipe (52) of the coupling members (51) is connected to the mounting (3) and the tool-receiving sleeve (1).

11. Reamer holder as claimed in claim 10, characterised in that the coupling member (51) connected to the tool-receiving sleeve has a radial annular shoulder as an abutment and sealing surface directed towards the threaded pipe (52) and that the threaded pipe (52) is screwed into an internal thread (60) provided in the bore in the tool-receiving sleeve (1), whereby the radial annular shoulder is stressed via a sealing ring (61) against an annular end face of the tool-receiving sleeve (1).

12. Reamer holder as claimed in claim 11, characterised in that screwed onto the threaded pipe (52) of the coupling member (51) coupled to the mounting (3) there is a connecting ring (55) provided with an internal thread into whose thread section which projects beyond the threaded pipe (52) a tightening screw (56) is screwed and that the head of the tightening screw (56) is stressed via a sealing ring (62) against a radial annular shoulder in the bore (20) of the mounting (3).

13. Reamer holder as claimed in claim 12, characterised in that the threaded pipe (52) of a coupling member (51) is screwed to a connecting member (71) pushed into a bore (70) of the mounting (3) and that the connecting member (71) is sealed with respect to the bore (70) by means of at least one O-ring (72, 73).

14. Reamer holder as claimed in claim 9, characterised in that liquid-tight adhesive connections (25, 25') are provided between the end regions (47, 48) of the hose (46) and the walls of the bores (20, 21) in the mounting (3) and the tool-receiving sleeve (1).

15. Reamer holder as claimed in one of claims 1 to 14, characterised in that the mounting (3) has a machine insert member (29) with a radial sliding surface (8) at its end, which forms an outer limiting surface, and a sleeve (31) embracing the coupling region (22) and a portion of the tool-receiving sleeve (1), whereby the machine insert member (29) and the sleeve (31) are connected together after manufacture with their final dimensions.

16. Reamer holder as claimed in claim 15, characterised in that the machine insert member (29) and the sleeve (31) have complementary centering sections (30, 30') which engage within one another and walls which together form a chamber, the chamber serving to receive an adhesive to connect the machine insert member (29) and the sleeve (31).

**Revendications**

1. Dispositif de support d'outil, en particulier dispositif de support d'alésoir pour machines-outils, comprenant un support (3) à fixer sur les machines-outils, un manchon porte-outil (1) disposé dans le support (3) avec un jeu radial et un raccordement fixe en rotation entre le support (3) et le manchon porte-outil (1) par l'intermédiaire d'un accouplement (2, 5, 5', 6, 6'), avantageusement un accouplement « oldham », qui possède un disque d'accouplement (2) de forme et de disposition telles, par rapport aux faces frontales opposées (8 ou 10) du support (3) ou du manchon porte-outil (1), que le disque d'accouplement (2) peut effectuer des mouvements relatifs dans toutes les directions radiales, comportant en outre une pièce tubulaire (46) étanche aux liquides, qui franchit au moins la zone dans laquelle le support (3) et le manchon porte-outil (1) se font face avec interposition du disque d'accouplement (2), et qui est étoupée aux extrémités (47, 48) contre les alésages centraux du support (3) et du manchon porte-outil (1) et sert à l'amenée de l'agent de refroidissement à l'outil, caractérisé par le fait que la pièce annulaire (46), étanche aux liquides, est en une matière déformable par le mouvement relatif du support (3) et du manchon porte-outil (1) et que la pièce (46) est reliée fermement à ses zones d'extrémités (47, 48) avec le support (3) et le manchon porte-outil (1).

2. Dispositif de support d'alésoir selon la revendication 1, caractérisé par le fait que, des deux côtés du disque d'accouplement (2), sont prévues des surfaces frontales radiales (7, 9), que les deux surfaces frontales radiales côté accouplement (7, 9) et des parties, s'étendant radialement, des surfaces frontales (8 et 10) associées du support (3) et du manchon porte-outil (1) sont chacune formées par des surfaces de glissement planes et, pour transmettre les efforts axiaux d'avance de l'outil, se font face par paires et sont en contact.

3. Dispositif de support d'alésoir selon la revendication 1, caractérisé par le fait que toutes les surfaces frontales radiales (7, 9) du disque d'accouplement (2) et toutes les surfaces frontales radiales (8, 9) du support (3) et du manchon porte-outil (1) sont formées par des surfaces de glissement planes perpendiculaires à l'axe de rotation du manchon porte-outil (11).

4. Dispositif de support d'alésoir selon l'une des revendications 1 à 3, caractérisé par le fait que les deux surfaces de glissement (7, 8 ; 9, 10) respectives glissant l'une sur l'autre ont au moins approximativement, les mêmes dimensions et formes.

5. Dispositif de support d'alésoir selon l'une des revendications 1 à 4, caractérisé par le fait qu'entre les surfaces de glissement (7, 8 ; 9, 10) est prévu un agent de graissage ou de glissement, avantageusement de l'huile, qui reste en liaison d'écoulement avec une chambre à huile (11) ménagée dans le support.

6. Dispositif de support d'alésoir selon l'une des revendications 1 à 4, caractérisé par le fait qu'au moins une des surfaces (7, 8 ; 9, 10) qui se trouve respectivement en liaison de glissement avec une autre, est enduite d'une matière plastique à pouvoir « anti-blocking » élevé (faible coefficient de frottement).

7. Dispositif de support d'alésoir, selon l'une des revendications 1 à 6, caractérisé par le fait que le disque d'accouplement (2) est en matière plastique à pouvoir « anti-blocking » élevé (faible coefficient de frottement).

8. Dispositif de support d'alésoir selon l'une des revendications 1 à 7, caractérisé par le fait que la pièce tubulaire déformable est sous forme d'un tuyau (46) flexible, adapté à la pression du liquide de refroidissement, avantageusement en matière plastique ou métal.

9. Dispositif de support d'alésoir selon la revendication 8, caractérisé par le fait que la zone d'extrémité (47, 48) du tuyau (46) est reliée aux parois des alésages du support (3) et du manchon porte-outil (1), de façon étanche aux liquides, par des armatures de tuyau (50).

10. Dispositif de support d'alésoir selon la revendication 9, caractérisé par le fait que les armateurs de tuyau (50) présentent chacune une pièce d'accouplement (51) à alésage central, munie d'un raccord fileté (52) et d'une douille (53) opposée à celui-ci, et un écrou chapeau (54) vissable du côté de la douille (53) sur la pièce d'accouplement, que les zones d'extrémité (47, 48) du tuyau (46) sont chacune coincées, avec étanchéité au liquide, entre la douille (53) et l'écrou-chapeau (54) et qu'un raccord fileté (52) de la pièce d'accouplement (51) est relié au support (3) ou au manchon porte-outil (1) respectif.

11. Dispositif de support d'alésoir selon la revendication 10, caractérisé par le fait que la pièce d'accouplement (51) reliée au manchon porte-outil présente, comme surface de butée et d'étanchéité, un épaulement annulaire radial tourné vers le raccord fileté (52) et que le raccord fileté (52) engrène avec un taraudage (60) prévu dans l'alésage du manchon porte-outil (1) l'épaulement annulaire étant serré contre une surface frontale annulaire du manchon porte-outil (1) avec interposition d'une bague d'étanchéité (61).

12. Dispositif de support d'alésoir selon la revendication 11, caractérisé par le fait que sur le raccord fileté (52) de la pièce d'accomplissement (51) reliée au support (3) est vissée une bague de liaison (55) taraudée, dans la section taraudée de laquelle est vissé un écrou de serrage (56) et que la tête de l'écrou de serrage (56) est serré dans l'alésage (20) du support (3) contre un épaulement annulaire, avec interposition d'un joint annulaire (62).

13. Dispositif de support d'alésoir selon la revendication 12, caractérisé par le fait que le raccord fileté (52) d'une pièce d'accouplement (51) est vissé dans une pièce de liaison (71) insérée dans un alésage (70) du support (3) et que la pièce de liaison (71) est étoupée, à l'égard de l'alésage (70), par au moins un joint torique (O-Ring) (72, 73).

14. Dispositif de support d'alésoir selon la revendication 9, caractérisé par le fait qu'entre les zones d'extrémité (47, 48) du tuyau (46) et les parois des alésages (20, 21) du support (3) et du manchon porte-outil (1), sont prévues des liaisons par colle (25, 25') étanches aux liquides.

15. Dispositif de support d'alésoir selon l'une des revendications 1 à 14, caractérisé par le fait que le support (3) comporte une pièce rapportée usinée (29) à surface de glissement (8) radiale côté frontal, qui forme une surface limite extérieure, et un manchon (31) entourant la zone d'accouplement (22) et une partie du manchon porte-pièce (1), la pièce rapportée usinée (29) et le manchon (31) étant, après fabrication, reliés entre eux par leurs extrémités.

16. Dispositif de support d'alésoir selon la revendication 15, caractérisé par le fait que la pièce rapportée usinée (29) et le manchon (31) présentent des sections de centrage (30, 30') complémentaires en prise l'une avec l'autre et des parois s'élargissant pour former une chambre, celle-ci servant à contenir un agent adhésif pour relier la pièce rapportée usinée (29) et le manchon (31).

Fig. 1

Fig. 2

Fig. 3

Fig. 4

Fig. 5

EP 0 171 574 B1